(19) Europäisches Patentamt

European Patent Office

Office européen des brevets

(11) Veröffentlichungsnummer: **0 427 056 A1**

(12) **EUROPÄISCHE PATENTANMELDUNG**

(21) Anmeldenummer: 90120535.1

(22) Anmeldetag: 26.10.90

(51) Int. Cl.⁵: **F16K 21/00**

(30) Priorität: 07.11.89 DE 3936981

(43) Veröffentlichungstag der Anmeldung:
15.05.91 Patentblatt 91/20

(84) Benannte Vertragsstaaten:
CH DE DK ES FR GB IT LI NL

(71) Anmelder: **FRIEDRICH GROHE
ARMATURENFABRIK GmbH & CO**
**Hauptstrasse 137**
**W-5870 Hemer 1(DE)**

(72) Erfinder: **Pawelzik, Manfred**
**Herringser Weg 5a**
**NL-4770 Soest(NL)**
Erfinder: **Titze, Horst**
**Malmkestrasse 18**
**W-5800 Hagen(DE)**

(54) Dichtring.

(57) Bei einem Dichtring aus elastischem Material für einen an einem stationären Körper schwenkbar angeordneten Wasserauslaufkörper, wobei der Dichtring an der einen Stirnseite V-förmig ausgebildete Dichtlippen aufweist, ist vorgesehen, daß der Dichtring (2) an der Gleitseite in der Mantelfläche (21) eine Ringkammer (20) als Fettreservoir aufweist, die axial zu beiden Seiten von der äußeren der beiden V-förmigen Dichtlippen (22) und einer Nebendichtlippe (24) begrenzt ist.

Fig. 2

## DICHTRING

Die Erfindung betrifft einen Dichtring aus elastischem Material für einen an einem stationären Körper schwenkbar angeordneten Wasserauslaufkörper, wobei der Dichtring an der einen Stirnseite V-förmig ausgebildete Dichtlippen aufweist.

Ein derartiger Dichtring ist beispielsweise aus der Druckschrift des deutschen Gebrauchsmusters 16 29 280 bekannt. Die V-förmig angeordneten Dichtlippen sind dabei dem vom Wasser beaufschlagten Raum zugekehrt und bewirken eine gute Abdichtung. Zur leichten Verschwenkbarkeit und Verschleißminderung wird der Dichtring mit Fett in den Auslaufkörper eingesetzt. Hierbei hat sich nun gezeigt, daß vielfach das Fett relativ schnell vom durchströmenden Wasser fortgespült wird, so daß schon bald nach der Inbenutzungnahme eine unerwünschte Schwergängigkeit und ein erhöhter Verschleiß im Bereich der Dichtung auftreten kann.

Der Erfindung liegt die Aufgabe zugrunde, den im Oberbegriff des Anspruchs 1 aufgeführten Dichtring zu verbessern und so auszubilden, daß die Leichtgängigkeit über einen relativ langen Zeitraum erhalten bleibt.

Diese Aufgabe wird erfindungsgemäß dadurch gelöst, daß der Dichtring an der Gleitseite in der Mantelfläche eine Ringkammer als Fettreservoir aufweist, die axial zu beiden Seiten von der äußeren der beiden V-förmigen Dichtlippen und einer Nebendichtlippe begrenzt ist. Mit dieser Ausbildung wird erreicht, daß von der in der äußeren Mantelfläche angeordneten Fettkammer die beiden äußeren, dynamisch beanspruchten Dichtlippen mit dem Fett über einen langen Zeitraum geschmiert werden können, so daß die Leichtgängigkeit erhalten bleibt und auch der Verschleiß der beiden Lippen erheblich reduziert wird. Sollte ferner die dem vom Wasser beaufschlagten Raum zugekehrte Dichtlippe einem stärkeren Verschleiß unterliegen und somit vorzeitig undicht werden, so kann von der Nebendichtlippe ein unerwünschter Wasseraustritt im Bereich der Dichtung verhindert werden. Weitere Ausgestaltungen der Erfindung sind in den Ansprüchen 2 bis 8 angegeben.

Ein Ausführungsbeispiel der Erfindung ist in der Zeichnung dargestellt und wird im folgenden näher beschrieben. Es zeigt

Figur 1 eine Spültisch-Mischbatterie mit verschwenkbarem Wasserauslaufkörper im Längsschnitt in verkleinerter Darstellung;

Figur 2 einen in der Figur 1 gezeigten Dichtring in vergrößerter Darstellung im Seitenschnitt.

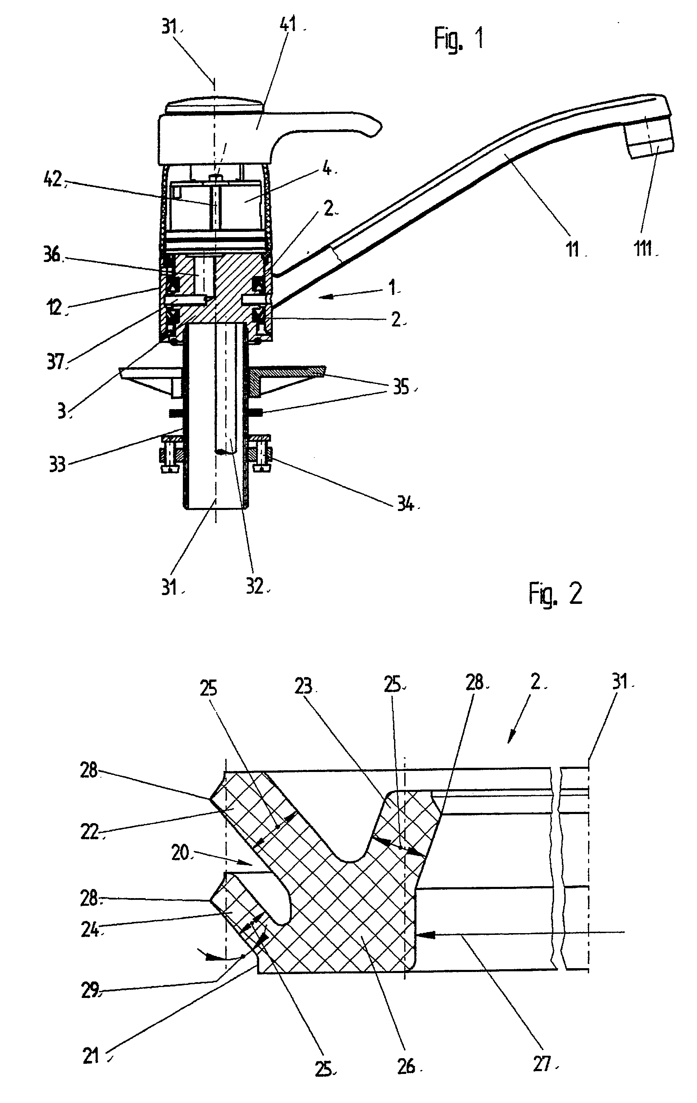

Die in Figur 1 dargestellte Spültisch-Mischbatterie besteht im wesentlichen aus einem an einem Spültisch befestigbaren Mischventilsockel 3, einem als Baueinheit ausgebildeten Mischventil 4 sowie einem verschwenkbar an dem Mischventilsockel 3 angeordneten Auslaufkörper 1.

Der Mischventilsockel 3 ist rotationssymmetrisch ausgebildet und trägt an der einen Seite einen rohrförmigen Gewindeansatz 33, der in einer Aufnahmebohrung eines Spültisches einführbar ist. Außerdem sind durch den rohrförmigen Gewindeansatz 33 die Versorgungsrohre 32 für Kalt- und Warmwasser für den Mischventilsockel 3 hindurchgeführt. In der Stecklage kann der Mischventilsockel 3 mit Hilfe von Unterlegscheiben 35 und einer Stellmutter 34 in bekannter Weise am Spültisch fixiert werden. Oberhalb des Mischventilsockels 3 ist das Mischventil 4 in Form einer separaten Baueinheit mit Hilfe von Befestigungsschrauben 42 fixiert, wobei die Kalt- und Warmwasserleitung durch den Mischventilsockel 3 (in der Zeichnung nicht dargestellt) hindurchgeführt sind und mit dem Verschluß- und Steuerorganen in dem gekapselten Mischventil 4 in Verbindung stehen. Das in dem Mischventil 4 erzeugte Mischwasser wird über einen Axialkanal 36 in den Mischventilsockel 3 zurückgeführt und gelangt von hier aus über einen am Mantel ausgebildeten Ringkanal 37 in den Auslaufkörper 1.

Die Wasserdurchlaufmenge und das Mischungsverhältnis von Kalt- und Warmwasser wird mit einem Hebelgriff 41, der in zwei Freiheitsgraden verschwenkbar ist, nämlich um eine waagerechte Achse zur Bestimmung der Gesamtausflußmenge und durch Drehung um eine Mittelachse 31 zur Bestimmung des Mischungsverhältnisses, eingestellt.

An der äußeren Mantelfläche in Ringnuten zu beiden Seiten des Ringkanals 37 ist jeweils ein Dichtring 2 ange ordnet, die mit der Innenwandung einer über den Mischventilsockel 3 streifbaren Auslaufhülse 12 des Auslaufkörpers 1 zusammenwirken. An der Auslaufhülse 12 ist an der einen Seite ein Auslaufrohr 11 ausgebildet, das an seinem anderen Ende ein Auslaufmundstück 111 aufweist, an dem das in dem Mischventil 4 erzeugte Mischwasser in das Spülbecken gerichtet austritt. Mit Hilfe der Auslaufhülse 12 ist somit das Auslaufrohr 11 um die Mittelachse 31 verschwenkbar ausgebildet.

Der jeweils axial zu den beiden Seiten des Ringkanals 37 angeordnete Dichtring 2 weist insgesamt, wie es insbesondere aus Figur 2 zu entnehmen ist, drei Dichtlippen auf, wobei der Dichtring 2 aus einem Elastomer mit einer Shore-Härte A von etwa 60 hergestellt ist. An seiner dem Wasser zugekehrten bzw. dem Ringkanal 37 zugekehrten Stirnseite sind V-förmig zwei Dichtlippen 22,23 ausgebildet. Die innere Dichtlippe 23 ist dabei gegen die Mittelachse 31 derart geneigt ausgebildet, daß bei einem Einführen des Dichtrings 2 in die Nut eine drehfeste Verbindung durch Reibschluß hergestellt wird. Die äußere, etwas länger ausgebildete Dichtlippe 22 wirkt dagegen mit der Mantelfläche der Auslaufhülse 12 zusammen und wird durch die Schwenkbewegungen dynamisch belastet. Axial versetzt zu der Dichtlippe 22 ist eine Nebendichtlippe 24 ausgebildet und parallel zur Dichtlippe 22 angeordnet. Die von der Dichtlippe 22 und der Nebendichtlippe 24 begrenzt Ringkammer 20 wird vor dem Einbau mit Fett gefüllt und dient als Fettreservoir, aus dem die dynamisch beanspruchte Dichtlippe 22 und die Nebendichtlippe 24 während des Gebrauchszeitraums mit Schmiermittel versorgt werden. Die Dichtlippe 22 und die Nebendichtlippe 24 sind im entspannten Zustand mit einem Winkel (29) von etwa 40° gegen die Mittelachse (13) geneigt angeordnet. Zur dauerhaften und dichten Anlage sind die Dichtlippen 22,23 und die Nebendichtlippe 24 mit stumpfwinkligen Kanten 28 versehen. Die Nebendichtlippe 24 weist dabei eine Dicke von etwa 1/2 der Dicke 25 der Dichtlippen 22, 23 auf.

Als zweckmäßig hat sich folgende Dimensionierung des Dichtrings 2 gezeigt: Bei einem inneren Durchmesser 27 von 37 mm weisen die beiden V-förmig angeordneten Dichtlippen 22,23 eine Dicke 25 von 2 mm und die Nebendichtlippe 24 eine Dicke 25 von 1 mm auf. Die radiale Dicke des Dichtringkerns entspricht dabei etwa der Summe der Dicken 25 der Dichtlippen 22,23 und der Nebendichtlippe 24.

## Ansprüche

1. Dichtring aus elastischem Material für einen an einem stationären Körper schwenkbar angeordneten Wasserauslaufkörper, wobei der Dichtring an der einen Stirnseite V-förmig ausgebildete Dichtlippen aufweist, dadurch gekennzeichnet, daß der Dichtring (2) an der Gleitseite in der Mantelfläche (21) eine Ringkammer (20) als Fettreservoir aufweist, die axial zu beiden Seiten von der äußeren der beiden V-förmigen Dichtlippen (22) und einer Nebendichtlippe (24) begrenzt ist.

3. Dichtring nach Anspruch 1, dadurch gekennzeichnet, daß die Ringkammer (20) eine axiale Länge hat, die etwa der Dicke (25) der Nebendichtlippe (24) entspricht.

3. Dichtring nach Anspruch 1 oder 2, dadurch gekennzeichnet, daß die beiden die Ringkammer (20) begrenzenden Dichtlippen im entspannten Zustand mit einem Winkel (29) von etwa 30° bis 50°, vorzugsweise 40° gegen die Mittelachse (13) geneigt sind.

4. Dichtring nach einem der Ansprüche 1 bis 3, dadurch gekennzeichnet, daß die Summe der Dicken (25) der drei Dichtlippen etwa der radialen Dicke des Dichtringkerns (26) entspricht.

5. Dichtring nach einem der Ansprüche 1 bis 4, dadurch gekennzeichnet, daß die Nebendichtlippe (24) etwa die halbe Dicke (25) der beiden V-förmig angeordneten Dichtlippen (22,23) aufweist.

6. Dichtring nach einem der Ansprüche 1 bis 5, dadurch gekennzeichnet, daß die innere Dichtlippe (23) und der innere Durchmesser (27) des Dichtringkerns (26) so bemessen sind, daß der Dichtring (2) drehfest an der Innenseite durch Reibschluß gehalten ist.

7. Dichtring nach einem der Ansprüche 1 bis 6, dadurch gekennzeichnet, daß bei einem inneren Durchmesser (27) von 37 mm die V-förmig angeordneten Dichtlippen (22,23) eine Dicke (25) von etwa 2 mm aufweisen und der Dichtring (2) aus einem Werkstoff mit einer Shore-Härte A von etwa 60 hergestellt ist.

8. Dichtring nach einem der Ansprüche 1 bis 7, dadurch gekennzeichnet, daß die V-förmigen Dichtlippen (22, 23) und die Nebendichtlippe (24) zur Abdichtung je mit einer stumpfwinkligen Kante (28) versehen sind.

Fig. 1

Fig. 2

Europäisches
Patentamt

**EUROPÄISCHER
RECHERCHENBERICHT**

Nummer der Anmeldung

**EP 90 12 0535**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-8 710 52   (J.R.H. PRODUCTS & CO) <br> * Figur 1 * <br><br> – – – | 1 | F 16 K <br> 21/00 |
| A | FR-A-2 176 328   (PRES BLOCK) <br> * das ganze Dokument * <br><br> – – – | 1 | |
| D,A | DE-U-1 629 280   (GROHE) <br><br> – – – – – | | |

| | RECHERCHIERTE SACHGEBIETE (Int. Cl.5) |
|---|---|
| | F 16 K <br> F 16 L |

Der vorliegende Recherchenbericht wurde für alle Patentansprüche erstellt

| Recherchenort | Abschlußdatum der Recherche | Prüfer |
|---|---|---|
| Berlin | 25 Januar 91 | SCHLABBACH M |